# EUROPEAN PATENT APPLICATION

(11) **EP 2 623 773 A2**
(43) Date of publication of application: **07.08.2013**
(21) Application number: 13153075.0
(22) Date of filing: 29.01.2013
(51) Int. Cl.: F03D 1/06

(54) **Wind turbine blade and wind turbine generator having the same**

(30) Priority: 31.01.2012 JP 2012019177
(71) Applicant: MITSUBISHI HEAVY INDUSTRIES, LTD., Tokyo 108-8215 (JP)
(72) Inventor: Kawasetsu, Nozomu, TOKYO, 108-8215 (JP); Kuroiwa, Takao, TOKYO, 108-8215 (JP); Shindo, Kentaro, TOKYO, 108-8215 (JP)
(74) Representative: Intès, Didier Gérard André

(57) **Abstract**

It is intended to provide a wind turbine blade and a wind turbine generator that are capable of improving reliability by preventing occurrence of fatal damage while reducing the maintenance cost. A rotor blade is mounted radially around a rotation axis to a rotor hub of a wind turbine and is provided with a blade body 17 and a main spar 26. The blade body 17 includes: a concave-side outer shell 21 and a convex-side outer shell 22 that are arranged to face each other, the blade body 17 having a shape of an airfoil in cross-section and having a hollow interior part. The main spar 26 extends in the blade body 17 in a longitudinal direction of the blade body 17 and connected to the blade body 17. The blade body 17 also includes: a leading-edge-side outer shell 23 provided on a tip side of the blade body 17 in the longitudinal direction and connecting the concave-side outer shell 21 and the convex-side outer shell 22 on a leading edge side, the leading-edge-side outer shell 23 forming a leading edge part; an inner partition plate 25 provided between the leading-edge-side outer shell 23 and the main spar 26 to be spaced from the leading-edge-side outer shell 23 toward a trailing edge, the inner partition plate 25 connecting the concave-side outer shell 21 and the convex-side outer shell 22 to each other on the leading edge side; and an abrasive-resistant film 24 covering an area including at least the leading edge part of a surface of the leading-edge-side outer shell 23.

## Description

### [Technical Field]

The present invention relates to a wind turbine blade used for wind power generation.

### [Background Art]

In recent years, due to increasing interest in the global environment, a power generating apparatus which uses clean energy without depending on fossil fuel is becoming popular. Known as one type of the power generating apparatus is a wind turbine generator. In the wind turbine generator, a wind turbine is rotated upon receiving wind power on a blade and the obtained rotational energy is converted into electrical energy in the generator.

In this type of wind turbine generator, output of a single unit used to be about a few hundred kilowatts. However, in recent trend of improving power generation efficiency, wind turbine generators have increased in size about few megawatts. In these large wind turbine generators, the length of the blade is over 50 meters and the circumferential speed of the tip of the blade is likely to exceed 80 meters per second.

It is known to prepare the blade for abrasive-wear measure by applying coating and a protector which have superior impact resistance and wear resistance to the blade so as to prevent wear and damage caused by dust and raindrop hitting a leading-edge part of the blade (e.g. Patent Literature 1). It is know that abrasive wear becomes evident particularly when the circumferential speed of the blade tip exceeds approximately 60 meters per second. Thus, the abrasive-wear measure described above was taken for almost all the blades rotating at such high circumferential speed.

### [Citation List]

### [Patent Literature]

### [PTL 1]

JP 2006-300057 A

### [Summary of Invention]

### [Technical Problem]

However, as the wind turbine becomes larger, the circumferential speed of the leading edge part of the rotor blade increases. This accelerates damage of the wear protection layer even in the case where a wear protection layer is provided. In this case maintenance and repair must be performed more often compared to the normal case where the maintenance and repair is performed every four to five years. Further, the area of the leading edge part where the circumferential speed exceeds 60 meters per second increases and accordingly, the area where the wear protection layer is applied increases. As a result, the area requiring maintenance and repair increase and there is a concern for higher maintenance cost.
Further, a wind turbine of a large wind turbine generator is often installed offshore. Thus, there is a concern for acceleration of the damage of the wear protection layer, which is exposed to constant collision of waves and to monsoons and typhoons, etc. Furthermore, if the damage of the wear protection layer gets worse in a short period of time, the wear protection layer becomes perforated, causing the water to enter the interior of the rotor blade. This may have adverse effects on inner structural parts and electrical components and thus there is a concern that this might results in fatal damage of the wind turbine generator.

The present invention is made in view of the above issues and it is intended to provide a wind turbine blade and a wind turbine generator that are capable of improving reliability by preventing occurrence of fatal damage while reducing the maintenance cost.

### [Advantageous Effects of Invention]

The present invention proposes the following means for solving the above issues.
More specifically, a wind turbine blade according to the present invention is configured to be mounted radially around a rotation axis to a rotor hub of a wind turbine, and comprises:
a blade body comprising: a concave-side outer shell and a convex-side outer shell that are arranged to face each other, the blade body having a shape of an airfoil in cross-section and having a hollow interior part; and
a spar member extending in the blade body in a longitudinal direction of the blade body and connected to the blade body,
wherein the blade body further comprises: a leading-edge-side outer shell provided on a tip side of the blade body in the longitudinal direction and connecting the concave-side outer shell and the convex-side outer shell on a leading edge side, the leading-edge-side outer shell forming a leading edge part; an inner partition plate provided between the leading-edge-side outer shell and the spar member to be spaced from the leading-edge-side outer shell toward a trailing edge, the inner partition plate connecting the concave-side outer shell and the convex-side outer shell to each other on the leading edge side; and an abrasive-resistant film covering an area including at least the leading edge part of a surface of the leading-edge-side outer shell.
Further, in one embodiment, the abrasive-resistant film is provided to cover an entire surface of the leading-edge-side outer shell, and in another embodiment, the abrasive-resistant film is provided to partially cover a surface of the leading-edge-side outer shell.

According to this wind turbine blade, the abrasive-resistant film on the surface of the leading-edge-side of the blade body protects the beam member, etc. inside the blade body from dust and raindrop. Additionally, the inner partition plate is provided between the leading-edge-side outer shell and the spar member to form a double structure on the leading edge side by the leading-edge-side outer shell and the inner partition plate. Therefore, even in the case where the leading-edge-side outer shell becomes worn and damaged, creating a hole or the like, the inner partition plate can protect parts inside the blade body such as the spar member. In other words, it is possible to achieve redundancy and thus, it is possible to prevent fatal damage caused by dust, rain drops, sea water, etc entering the inside of the blade body while reducing the maintenance frequency.

Further, one of a filling material or a molding material may be provided in a space formed between the leading-edge-side outer shell and the inner partition wall.

By providing the filling material or the molding material in the space, the space between the leading-edge-side outer shell and the inner partition wall becomes a solid structure. As a result, it is easier to repair or restore the blade body when the leading-edge-side outer shell becomes damaged. This further enhances maintenance cost reduction and also improves the strength of the leading edge part.

Furthermore, the leading-edge-side outer shell may be removable with respect to the concave-side outer shell and the convex-side outer shell.

As the leading-edge-side outer shell is removable, during maintenance on a damaged leading-edge-side outer shell, the leading-edge-side outer shell can be replaced or repaired by removing only the leading-edge-side outer shell. This further reduces the maintenance cost.

Moreover, the leading-edge-side outer shell may be separable into a plurality of sections in the longitudinal direction.

As the leading-edge-side outer shell is separable, if only a part of the leading-edge-side outer shell is damaged and requires repair, only the section having the damaged part needs to be removed and repaired or restored. This makes it easier to repair or restore the damaged part and thus, the maintenance cost can be reduced.

Further, the abrasive-resistant film may be made of a metal material, and
the wind turbine blade further may comprise a lightning protection unit for leading lightning current caused by lightning from the abrasive-resistant film toward the ground via the rotor hub.

By using this lightning protection unit, it is possible to avoid fatal damage from lightning and thus it is possible to improve reliability.

Furthermore, the abrasive-resistant film may be made of a metal material, and
the wind turbine blade may further comprise an anti-adfreezing unit for electrifying and heating the abrasive-resistant film.

The anti-adfreezing unit automatically prevents ice from adhering to the blade body to suppress decline in rotational performance of the wind turbine blade. As a result, the maintenance cost is reduced and the performance is improved.

Moreover, a wind turbine generator according to the present invention may comprise:
a rotor hub configured rotatable around a rotation axis;
a tower for rotatably supporting the rotor hub;
a wind turbine comprising the wind turbine blade of any one of claims 1 to 6, the wind turbine blade mounted to the rotor hub radially around the rotation axis; and
a generator configured to be driven directly or indirectly by rotation of a rotation shaft.

According to this wind turbine generator, the leading edge side of the blade body in the wind turbine blade has the double structure formed by the leading-edge-side outer shell and the inner partition plate, thereby attaining redundancy. Therefore, it is possible to reduce the maintenance cost as the maintenance is performed less frequently and to improve reliability as fatal damage of the wind turbine blade.

### [Advantageous Effects]

According to the wind turbine blade and the wind turbine generator of the present invention, the leading edge is protected by the double structure formed by the leading-edge-side outer shell and the inner partition plate. Thus, it is possible to reduce the maintenance cost and also to improve reliability by preventing occurrence of fatal damage.

### [Brief Description of Drawings]

[FIG.1] FIG.1 is a side view of an overall structure of a wind turbine generator according to a first embodiment of the present invention.
[FIG.2] FIG.2 is an oblique view and a partial fragmentary of a rotor blade of the wind turbine generator according to the first embodiment of the present invention
[FIG.3A] FIG.3A is a cross-sectional view of the rotor blade taken along line A-A of FIG.2.
[FIG.3B] FIG.3B is a cross-sectional view of the rotor blade taken along line B-B of FIG.2.
[FIG.3C] FIG.3C is a cross-sectional view of the rotor blade taken along line C-C of FIG.2.
[FIG.4] FIG.4 is a cross-sectional view of a part of the rotor blade of the wind turbine generator according to a second embodiment of the present invention, the view being taken at the same place as FIG.3C.

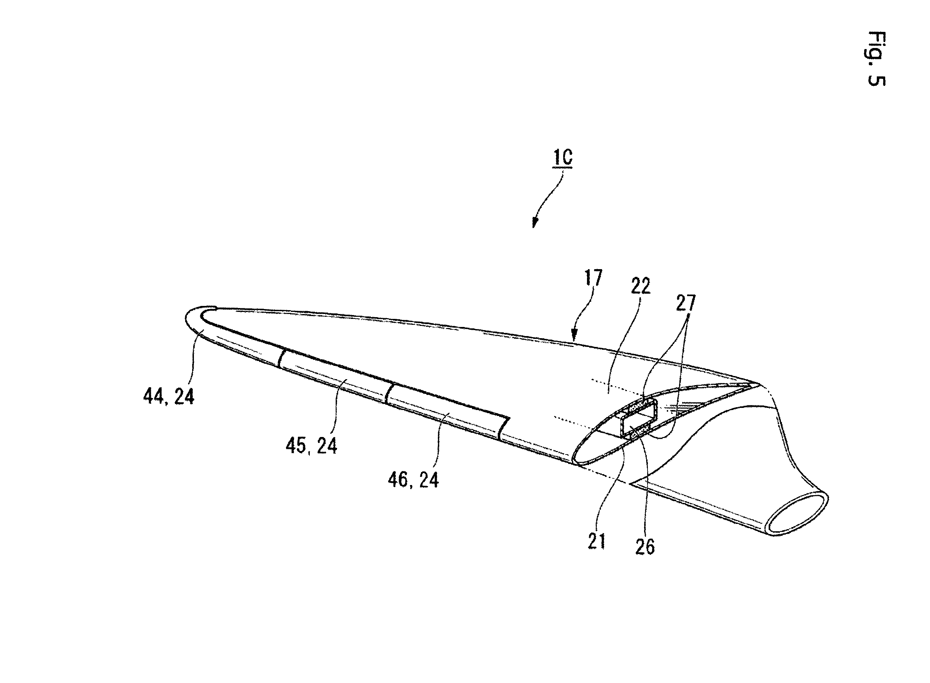

[FIG.5] FIG.5 is an oblique view and a partial fragmentary of the rotor blade of the wind turbine generator according to a third embodiment of the present invention.
[FIG.6] FIG.6 is a top view of the rotor blade of the wind turbine generator according to a fourth embodiment of the present invention.
[FIG.7A] FIG.7A is a cross-sectional view of the rotor blade of the wind turbine generator taken along line A-A of FIG.6.
[FIG.7B] FIG.7B is a cross-sectional view of the rotor blade of the wind turbine generator taken along line B-B of FIG.6.
[FIG.8] FIG.8 is a top view of the rotor blade of the wind turbine generator according to a fifth embodiment of the present invention.

### [Description of Embodiments]

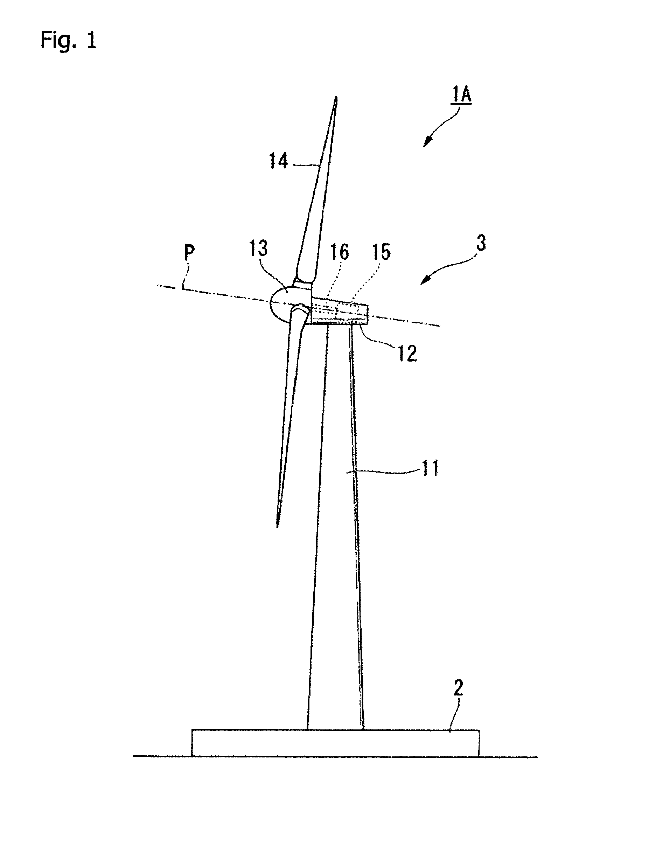

A wind turbine generator 1A according to a first embodiment of the present invention is described below.
As illustrated in FIG.1, the wind turbine generator 1A is provided with a foundation 2 installed on the ground or installed in the water in a floating manner, a wind turbine 3 installed on the foundation 2 and configured rotatably around an axis P of a rotation shaft 16, and a generator 15 for converting rotational energy obtained from rotation of the wind turbine 3 into electrical energy.

The wind turbine 3 includes a tower 11 installed on the foundation 2, a nacelle 12 installed on the tower 11, a rotor hub 13 attached to the nacelle 12 rotatably around the axis P, and a plurality of rotor blades (wind turbine blades) 14 mounted to the rotor hub 13 radially around the axis P.

The generator 15 is housed in the nacelle 12 and axially connected to the rotor hub 13 via the rotation shaft 16. Herein, a gearbox (not shown) may be provided between the rotation shaft 16 and the generator 15 so as to increase rotation of the rotor hub 13 and transmit the increased rotation to the generator 15.

The foundation 2 is a plate-like member installed on the ground or in the water and extending almost horizontally.

The tower 11 is a column-like member installed on the foundation 2 in a standing manner and extending almost vertically. On an upper end of the tower 2, the nacelle 2 is provided.

The nacelle 12 is a container-like member installed on the upper end of the tower 11 and forming an interior space inside. In the interior space, the generator 15 is housed. In this embodiment, this nacelle 12 is arranged to extend in a direction perpendicular to the standing direction of the tower 11, i.e. almost horizontally.
Herein, the installation angle of the nacelle 12 relative to the horizontal direction may be set by detecting the wind direction by a wind vane, etc. so that the rotor blade 14 receives the wind power efficiently.

The rotor hub 13 is a member attached to an end of the nacelle 12 (a left-hand end of the nacelle 12 in FIG.1) and configured rotatable around the axis P by means of the rotation shaft 16. The rotor hub 13 is axially connected via the rotation shaft 16 and the gearbox to the generator 15 housed in the nacelle 12

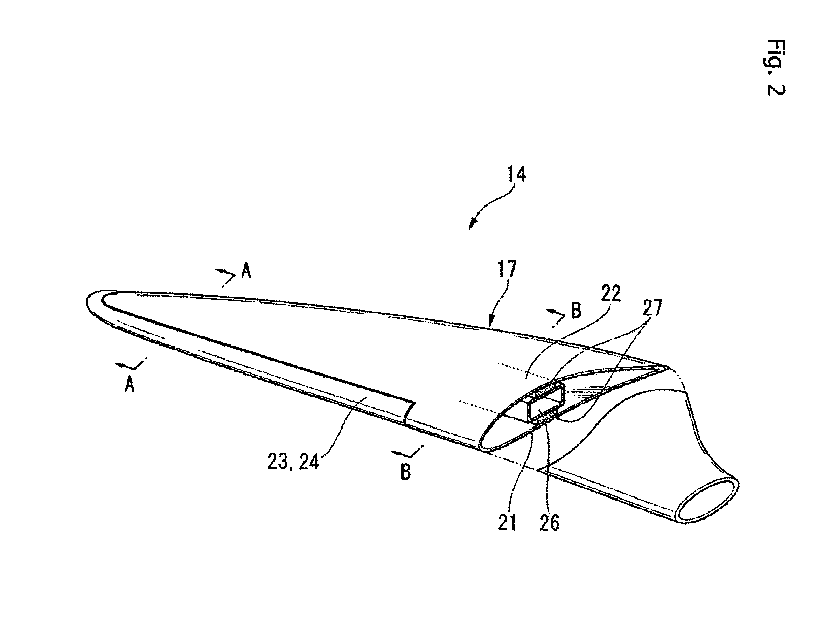

Next, the rotor blade 14 is described.
The rotor blade 14 is a plurality of blade members attached radially around the axis P.
As illustrated in FIG.2, each of the rotor blades 14 is provided with a blade body 17 formed as a hollow member extending in the radial direction of the axis P, and a main spar (a spar member) 26 arranged inside the blade body 17 approximately at a center in the direction perpendicular to the radial direction of the axis P and extending in the radial direction of the axis P.

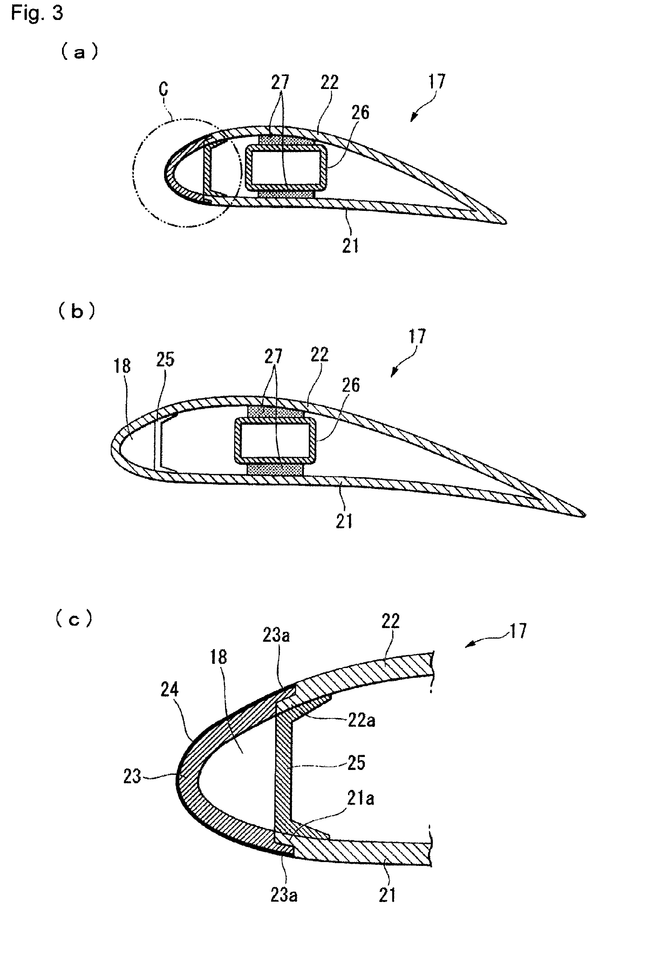

As illustrated in FIG.2 and FIG.3, the blade body 17 is made of glass fiber reinforced plastic and carbon fiber reinforced plastic. Further, this blade body 17 is provided with a concave-side (pressure-side) outer shell 21 forming a concave-side (pressure-side) outline of an airfoil, and a convex-side (suction-side) outer shell 22 forming a convex-side (suction-side) outline of the airfoil so as to have a shape of an airfoil in cross-section in the radial direction of the axis P.

The blade body 17 is further provided with: a leading-edge-side outer shell 23 configured to connect the concave-side outer shell 21 and the convex-side outer shell 22 on a part of a leading edge side; an abrasive-resistant film 24 covering a surface of the leading-edge-side outer shell 23; and an inner partition plate 25 provided between the leading-edge-side outer shell 23 and the spar member 26.

The leading-edge-side outer shell 23 forms a part of the leading edge side of the blade body 17. In other words, the leading-edge-side outer shell 23 connects the concave-side outer shell 21 and the convex-side outer shell 22 and forms a leading edge part of the blade body 17 on the leading edge side in a prescribed area which is outer side in the radial direction of the axis P, i.e. the longitudinal direction of the blade body 17.

More specifically, as illustrated in FIG.3A and FIG.3C, at a leading-edge-side end of each of the concave-side outer shell 21 and the convex-side outer shell 22 on the leading edge side, a stepped portion 21a, 22a is formed such that a surface of each of the concave-side outer shell 21 and the convex-side outer shell 22 at the leading-edge-side end is recessed. Further, at a leading-edge-side end of each of the leading-edge-side outer shell 23, a stepped portion 23a is formed to concave from an inner surface 23b toward an outer circumference. In such a manner that the stepped portion 21a is engaged with the stepped portion 23a and the stepped portion 22a is engaged with the stepped portion 23a, the leading-edge-side outer shell 23 is fitted to the concave-side outer shell 21 and the convex-side outer shell 22 to cover the shells 21, 22 from outside. The shells 21, 22, 23 are fixed rigidly to each other so as to connect the concave-side outer shell 21 and the convex-side outer shell 22.

The above prescribed area where the leading-edge-side outer shell 23 is provided may include at least a region where the circumferential speed of the rotor blade 13 becomes over 60 meters per second. Similarly to the concave-side outer shell 21and the convex-side outer shell 22, the leading-edge-side outer shell 23 may be made of glass fiber reinforced plastic and carbon fiber reinforced plastic, or different material.

As illustrated in FIG.3B, in an area where the leading-edge-side outer shell. 23 is not provided, that is an area outside the prescribed area, the concave-side outer shell 21 and the convex-side outer shell 22 are directly connected on the leading edge side of the blade body 17 to form the leading edge part of the blade body 17.

The abrasive-resistant film 24 is proved, for instance, by installing coated resin material, adhering metal foil of aluminum, titanium or ferrous and is a protective member covering the entire surface of the leading-edge-side outer shell 23. The abrasive-resistant film 24 may be placed at least in an area covering the leading edge part of the blade body 15 in the surface of the leading-edge-side outer shell 23, or may be placed in an area larger than the surface of the leading-edge-side outer shell 23, i.e. over a surface of the concave-side outer shell 21 and the convex-side outer shell 22.

Similarly to the concave-side outer shell 21 and the convex-side outer shell 22, the inner partition plate 25 is made of glass fiber reinforced plastic and carbon fiber reinforced plastic. The inner partition plate 25 is provided between the leading-edge-side outer shell 23 and the main spar 26 and spaced from the leading-edge-side outer shell 23 toward the trailing edge. The inner partition plate 25 is a plate-like member connecting the concave-side outer shell 21 and the convex-side outer shell 22. In this manner, a space 18 is formed between the leading-edge-side outer shell 23 and the inner partition plate 25.

Further, this inner partition plate 25 extends in a radial area in the radial direction of the axis P. The radial area corresponds to the area where the leading-edge-side outer shell 23 is provided. In this embodiment, the inner partition plate 25 is provided so that a face of the inner partition plate 52 facing the leading edge side is fitted to leading-edge-side end surfaces of the concave-side outer shell 21 and the convex-side outer shell 22.

The main spar 26 is made of glass fiber reinforced plastic, carbon fiber reinforced plastic, etc. The main spar 26 is a hollow column member arranged in the blade body 17 and extending in the radial direction of the axis P. An adhesion layer 27 is provided on surfaces of the main spar 26, which face the concave-side outer shell 21 and the convex-side outer shell 22 so as to bond and fix the main spar 26 to the concave-side outer shell 21 and the convex-side outer shell 22.

In this type of wind turbine generator 1a, the leading edge of the blade body 17 is protected by the abrasive-resistant film 24 from contacting with dust, rain drops, seawater, etc. The abrasive-resistant film 24 is provided to cover the entire surface of the leading-edge outer shell 23 and particularly in the case where the abrasive-resistant film 24 is provided in the region where the circumferential speed of the rotor blade 14 becomes 60 m/s or higher, i.e. the region where abrasive wear is significant, higher abrasive-resistant effect can be obtained.

Herein, as operation time of the wind turbine generator 1 passes, the abrasive-resistant film 24 may be abrasively damaged, resulting in penetration of the leading-edge-side outer shell 23 and the like. However, in the present embodiment, the inner partition plate 25 is provided in view of the above concern. Thus, even if the leading-edge-side outer shell 23 is perforated or the like, the inner partition plate 25 prevents dusts, rain drops, sea water, etc from entering the blade body 17 and thus, components such as the main spar 26 inside the blade body 17 can be protected.

According to the wind turbine blade 1A of this embodiment, the abrasive-resistant film 24 is provided on the surface of the leading-edge-side outer shell 23 on the leading edge side of the blade body 17 where the circumferential speed is high, so as to protect the leading edge part of the blade body 17. Further, the double structure formed by the leading-edge-side outer shell 23 and the inner partition plate 25 achieves redundancy. Therefore, it is possible to decrease the frequency of maintenance and to prevent fatal damage of the rotor blade while achieving cost reduction. This results in reliability improvement.

Further, in this embodiment, the space 18 is formed between the leading-edge-side outer shell 23 and the inner partition plate 25. However, this is not limitative and the space 18 may be filled to form a solid structure with a filling material or a molding material, such as plastic foam, fiber-reinforced resin having superior waterproof property and durability, rubber having superior shock absorption.

In the above case of the solid structure, if the leading-edge-side outer shell 23 is perforated from wear and it requires maintenance, it is easier to restore the original shape and thus, the maintenance cost is further reduced. Further, in this case, the strength of the leading edge part is enhanced and the durability and the abrasive-wear resistance is improved.

A wind turbine generator 1B according to a second embodiment of the present invention is described.
The same reference numerals are given without adding explanations for those configurations that are the same as the first embodiment.
In this embodiment, differently from the first embodiment, a leading-edge-side outer shell 33 is removable.

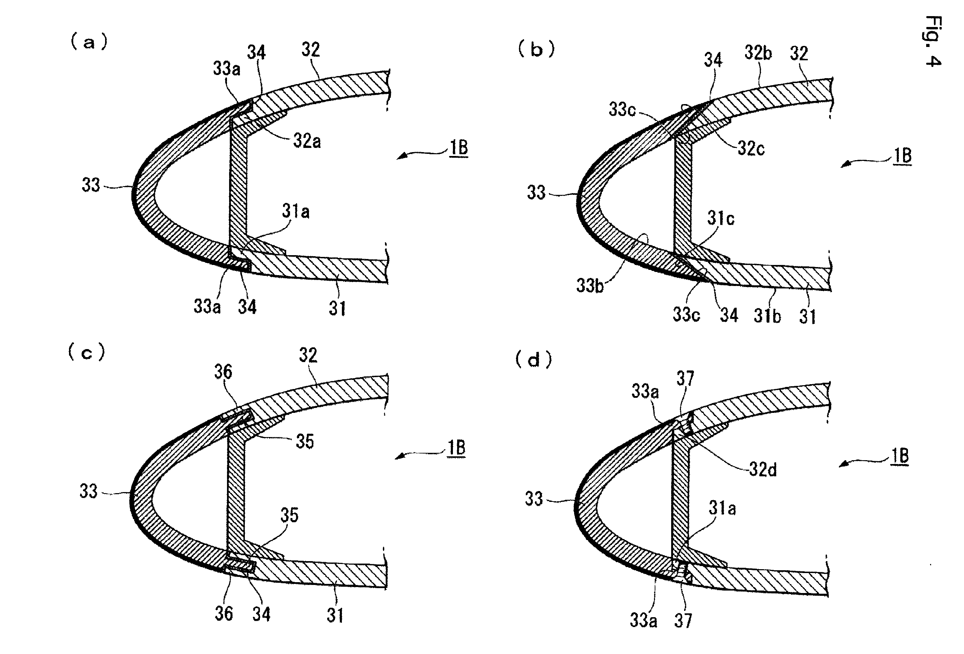

As illustrated in FIG.4A, the stepped portions 33a of the leading-edge-side outer shell 33 are joined to the stepped portions 31a,32a of the concave-side outer shell 31 and the convex-side outer shell 32 with adhesive 34 of, for instance, epoxy type, acrylic type or the like, between the stepped portion 33a and the stepped portions 31a, 32a of the concave-side outer shell 31 and the convex-side outer shell 32 so that the leading-edge-side outer shell 33 is fixed to the concave-side outer shell 31 and the convex-side outer shell 32.

In this type of wind turbine generator 1B, by removing the adhesive 34, the leading-edge-side outer shell 33 can be easily removed from the concave-side outer shell 31 and the convex-side outer shell 32. Further, the removed leading-edge-side outer shell 33 can be attached again easily by using the adhesive 34.

Therefore, when the leading-edge-side outer shell 33 is damaged and requires maintenance, the leading-edge-side outer shell 33 can be easily removed. Then, the leading-edge-side outer shell 33 can be replaced with a new one or repaired. As a result, the maintenance operation is simplified and the maintenance cost is further reduced.

Another version of this embodiment is illustrated in FIG.4B. In this version, an inclined surface 33c is formed, instead of the stepped portion 33a, in the trailing-edge-side end of the leading-edge-side outer shell 33. The inclined surface 33c is formed in such a manner that the inner surface 33b inclines outward from the leading edge side toward the trailing edge side. Further, in this case, the leading-edge-side end of each of the concave-side outer shell 31 and the convex-side outer shell 32 is formed into an inclined surface 31c, 32c instead of the stepped portion 31a, 32a. The inclined surface 31c, 32c is formed in such a manner that the inner surface 31b, 32d of each of the concave-side outer shell 31 and the convex-side outer shell 32 inclines inward from the leading edge side toward the trailing edge side so as to match the inclined surface 33c of the leading-edge-side outer shell 33. The leading-edge-side outer shell 33 is fitted to the concave-side outer shell 31 and the convex-side outer shell 32 to cover the shells 21, 22 from outside, and the inclined surface 31c and the inclined surface 33c are joined with the adhesive 34 and the inclined surface 32c and the inclined surface 33c are joined by the adhesive 34 so that the concave-side outer shell 31, the convex-side outer shell 32 and the leading-edge-side outer shell 33 are connected.

Yet another version of this embodiment is illustrated in FIG.4C. In this version, a projection 35 may be formed, instead of the stepped portion 33a, in the trailing-edge-side end of the leading-edge-side outer shell 33. The projection 35 is formed in such a manner that the trailing-edge-side ends of the leading-edge-side outer shell 33 protrudes toward the trailing edge. Further, in this case, a depression 36 is formed in the leading-edge-side-end of the concave-side outer shell 31 and the convex-side outer shell 32, instead of the stepped portion 31a, 32a. The depression 36 is engageable with the projection 35. In such a state that the projection 35 is engaged with the depression 36, the projection 35 and the depression 36 are bonded and fixed with the adhesive 34 so that the concave-side outer shell 31, the convex-side outer shell 32 and the leading-edge-side outer shell 33 are connected.

Another version of this embodiment is illustrated in FIG.4D. In this version, a bolt 37 may be provided for penetrating and fixing the stepped portions 31a, 32a, 33a. The bolt 37 may penetrate the stepped portion 31a and 33a as well as the stepped portion 32a and 33a in such a state that the stepped portion 31a and the stepped portion 33a are engaged and fixed to each other with the adhesive 34 and the stepped portion 32a and the stepped portion 33a are engaged and fixed to each other with the adhesive 34. The bolt 37 may be metal or resin. The bolt 37 made of resin is superior in weight saving and corrosion resistance.

The portions where the concave-side outer shell 31 is bonded and fixed with the convex-side outer shell 32 and the leading-edge-side outer shell 33 is not limited to the above configuration. The portion may have any shape as long as the concave-side outer shell 31 is firmly contactable or engageable with the leading-edge-side outer shell 33 and the convex-side outer shell 32 is firmly contactable or engageable with the leading-edge-side outer shell 33. For instance, the inclining directions of the inclined surfaces 31c, 32c, 33c may be reversed, and the depression 36 may be formed in the leading-edge-side outer shell 33 while the projection 35 is formed in the concave-side outer shell 31 and the convex-side outer shell 32.

A wind turbine generator 1C according to a third embodiment of the present invention is described.
The same reference numerals are given without adding explanations for those configurations that are the same as the first and second embodiments.
In this embodiment, differently from the first and second embodiments, a leading-edge-side outer shell 43 is configured separable.

The leading-edge-side outer shell 43 is separable into three sections along the radial direction of the axis P, which is the extending direction of the leading-edge-side outer shell 43. More specifically, the leading-edge-side outer shell 43 includes a first section 44, a second section 45 and a third section 46 which are arranged in this order from the leading edge side of the blade body 17.

In this type of wind turbine generator 1C, with the separable configuration of the leading-edge-side outer shell 43, if only a part of the leading-edge-side outer shell 43 needs to be repaired, it is not necessary to remove the entire leading-edge-side outer shell 43. More specifically, only one of the first section 44, the second section 45 and the third section 46, which has the area to be repaired, can be removed and repaired or reconstructed.

According to the wind turbine generator 1C of this embodiment, it is possible to simplify repair and reconstruction of the leading-edge-side outer shell 43 and thus, the maintenance cost can be further reduced.

A wind turbine generator 1D according to a fourth embodiment of the present invention is described.
The same reference numerals are given without adding explanations for those configurations that are the same as the first to third embodiments.
In this embodiment, a lightning protection unit 51 is further provided in the standard configuration of the wind turbine generator 1A of the first embodiment.

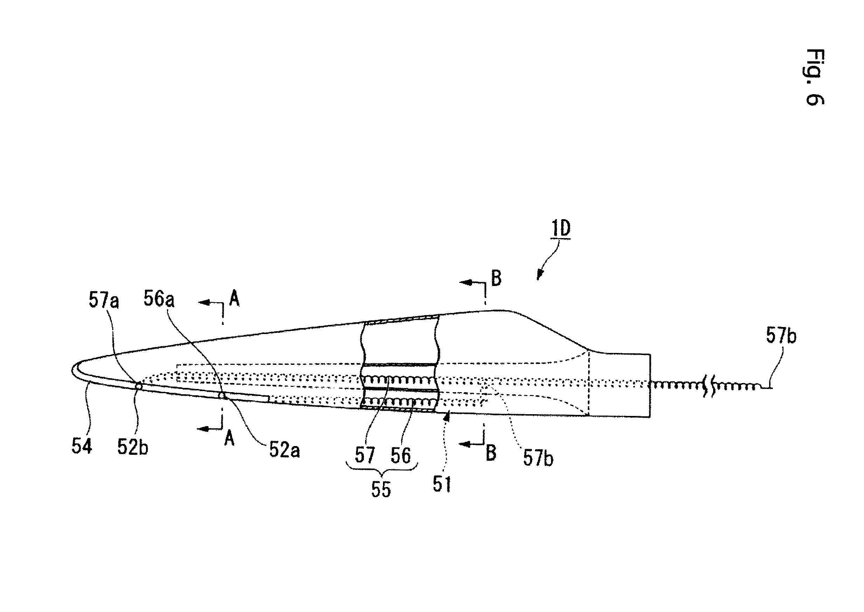

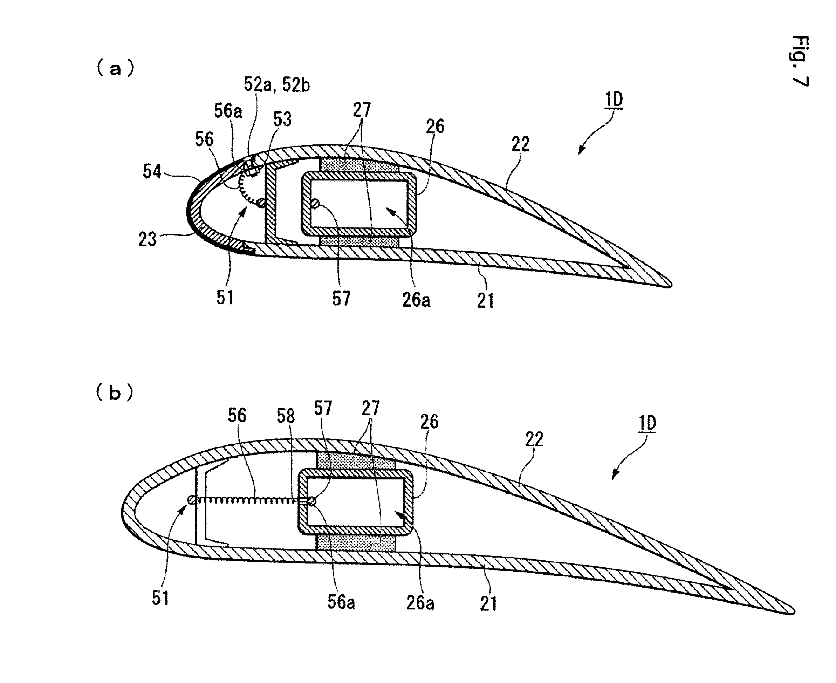

As illustrated in FIG.6 and FIG.7, the abrasive-resistant film 54 is made of conductive material such as metal foil.

The lightning protection unit 51 includes bolts 52a, 52b penetrating the leading-edge-side outer shell 23 and nuts 53 for fixing the bolts 52a, 52b, respectively, and a conducting wire 55 connected to the ground via the rotor hub 13.

The bolts 52a, 52b are made of metal and spaced from each other in the radial direction of the axis P which is the extending direction of the leading-edge-side outer shell 23. Each of the bolts 52a, 52b is provided to contact the abrasive resistant film 54 and to penetrate the leading-edge-side outer shell 23 inward from the surface of the leading-edge-side outer shell 23 near the convex-side outer shell 22.

The nuts 53 are made of metal material similarly to the bolts 52a, 52b. The nuts 53 are screwed to the respective bolts 52a, 52b to fix the respective bolts 52a 52b.

As illustrated in FIG.7, the conducting wire 55 includes a first conducting wire 56 and a second conducting wire 57. The first conducting wire 56 is connected at one end 56a to the bolt 52a which is arranged inside in the radial direction of the axis P with respect to the bolt 52b. The second conducting wire 57 is connected at one end 57a to the bolt 52b which is arranged outside in the radial direction of the axis P with respect to the bolt 52a.

The first conducting wire 56 is connected to the bolt 52a at one end 56a and arranged inward in the radial direction of the axis P along a leading-edge-side face of the inner partition plate 25 which faces the leading edge side.

The second conducting wire 57 is connected to the bolt 52b at one end 57a and arranged in such a manner that the second conducting wire 57 is introduced into the interior space 26a of the main spar 26 from the outside the main spar 26 in the radial direction of the axis P and extends inward in the radial direction of the axis P. Although not shown in the drawing, the second conducting wire 57 extends into the ground via the rotor hub 13 and the tower 11 and the other end 57b of the second conducting wire 57 is configured as an earth wire electrically connected to the ground.

Further, as illustrated in FIG.7B, the first conducting wire 56 is introduced into the interior space of the main spar 26 through a through-hole 58 formed in the leading-edge-side face of the main spar 26, at a halfway position of the main spar 26 in the radial direction of the axis P. And the other end 56b of the first conducting wire 56 is connected to the second conducting wire arranged in the main spar 26.

According to this type of wind turbine generator 1D, as the abrasive-resistant film 54 is made of material such as metal foil, when the lightning hits the wind turbine 3, the abrasive resistant film 54 works as a lightning rod (a receptor) and thus it is possible to lead lightning current toward the ground by means of the conducting wire 55 of the lightning protection unit 51. As a result, it is possible to protect inner component parts and electrical components (a control unit, a transformer, a power converter (not shown)) from being damaged by the lightening.

Further, the conducting wire 55 includes the first conducting wire 56 and the second conducting wire 57 and the lightning current caused by lightning is lead toward the ground via one of the conducting wires 56, 57. This provides redundancy and improves damage prevention effect.

According to the wind turbine generator 1D of this embodiment, the abrasive-resistant film 54 prevents damages caused by contacting with dust, rain drops, seawater, etc. and also functions as the lightning rod, thereby avoiding fatal damage from lightning. As a result, the reliability of the wind turbine blade is improved.

Furthermore, the conducting wire 55 may be coated with resin, or insulating paint may be applied to the inner surface 23b of the main spar where the conducting wire 55 is arranged so as to surely insulate the blade body 17. As a result, the lightning current is prevented from flowing anywhere besides through the lightning protection unit 51.

Moreover, the lightning protection unit 51 of this embodiment may be applied to the wind turbine generators 1B, 1C of the second and third embodiments.

A wind turbine generator 1E according to a fifth embodiment of the present invention is described.
The same reference numerals are given without adding explanations for those configurations that are the same as the first to fourth embodiments.
In this embodiment, an anti-adfreezing unit 61 is provided in stead of the lightning protection unit 51, in the standard configuration of the wind turbine generator 1D of the fourth embodiment.

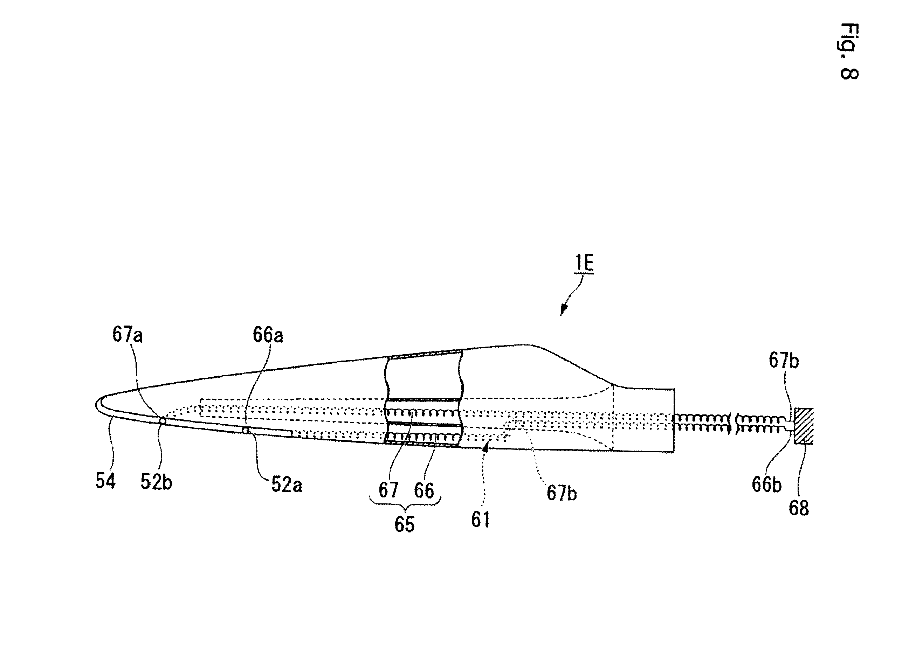

As illustrated in FIG.8, similarly to the lightning protection unit 51 of the fourth embodiment, the anti-adfreezing unit 61 includes bolts 52a, 52b penetrating the leading-edge-side outer shell 23 and nuts 53 for fixing the bolts 52a, 52b, respectively.
Further, the anti-adfreezing unit 61 also includes a conducting wire 65 connected to the bolt 52a, 52b at one end and lead toward the rotor hub 13 and a power supply unit 68 connected to the other end of the conducting wire 65.

The conducting wire 65 have substantially the same structure as the conducting wire 55 of the fourth embodiment and includes a first conducting wire 66 and a second conducting wire 67. The first conducting wire 66 is connected at one end 66a to the bolt 52a and the second conducting wire 67 is connected at one end 67a to the bolt 52b. However, differently from the fourth embodiment, the first conducting wire 66 is not connected to the second conducting wire 67 at a halfway position of the main spar 26 in the radial direction of the axis P and instead, the first conducting wire 66 and the second conducting wire 67 are arranged in the main spar 26 so as not to electrically contact each other and extend toward the rotor hub 13.

The power supply unit 68 is provided in the tower 11, in the nacelle 12 or outside the wind turbine 3. To the power unit 68, the other end 66b of the first conducting wire 66 and the other end 67b of the second conducting wire 67 are connected so as to supply electric power from the power supply unit to the abrasive-resistant film 24 via the first and second conducting wires 56, 57.

In this type of wind turbine generator le, by supplying electric power from the power supply unit 68 to the abrasive-resistant film 54, the abrasive-resistant film 54 is electrified and heated. As a result, it is possible to automatically prevent the situation in which ice adheres to the leading edge part of the blade body 17, which degrades the performance of the wind turbine 3.

According to the wind turbine generator 1E of this embodiment, the anti-adfreezing unit 61 prevents ice from adhering to the blade body 17 and thus, it is no longer necessary to manually scrap off the ice on the blade body 17. As a result, it is possible to save the maintenance work and also to achieve the cost reduction. Further, it is possible to suppress a decline in rotational performance of the wind turbine due to adfreezing, thereby improving the performance.

An amount and an area of the ice adhered to the blade body 17 are different depending on the temperature, wind direction, etc. Thus, how much electric power is supplied from the power supply unit and where the abrasive-resistant film 54 is provided shall be selected appropriately depending on different environmental conditions.

Moreover, the anti-adfreezing unit 61 of this embodiment may be applied to the wind turbine generators 1B, 1C of the second and third embodiments.

While the embodiments of the present invention have been described, it is obvious to those skilled in the art that various changes may be made without departing from the scope of the invention.
For instance, the face of inner partition plate 25 which faces the leading edge side is provided to fit to the leading-edge-side end surface of the concave-side outer shell 21, 31 and the convex-side outer shell 22, 32. However this is not limitative and the inner partition plate 25 may also be provided on the trailing edge side.

## Claims

1. A wind turbine blade (14) configured to be mounted radially around a rotation axis to a rotor hub (13) of a wind turbine (3), the wind turbine blade (14) being **characterized in that** it comprises:
a blade body (17) comprising:
a concave-side outer shell (21) and a convex-side outer shell (22) that are arranged to face each other, the blade body (17) having a shape of an airfoil in cross-section and having a hollow interior part; and
a spar member (26) extending in the blade body (17) in a longitudinal direction of the blade body and connected to the blade body,
wherein the blade body (17) further comprises:
a leading-edge-side outer shell (23) provided on a tip side of the blade body (17) in the longitudinal direction and connecting the concave-side outer shell (21) and the convex-side outer shell (22) on a leading edge side, the leading-edge-side outer shell (23) forming a leading edge part;
an inner partition plate (25) provided between the leading-edge-side outer shell (23) and the spar member (26) to be spaced from the leading-edge-side outer shell (23) toward a trailing edge, the inner partition plate (25) connecting the concave-side outer shell (21) and the convex-side outer shell (22) to each other on the leading edge side; and
an abrasive-resistant film (24) covering an area including at least the leading edge part of a surface of the leading-edge-side outer shell (23).

2. The wind turbine blade (14) according to claim 1,
wherein one of a filling material or a molding material is provided in a space (18) formed between the leading-edge-side outer shell (23) and the inner partition plate (25).

3. The wind turbine blade (14) according to claim 2,
wherein the leading-edge-side outer shell (23) is removable with respect to the concave-side outer shell (21) and the convex-side outer shell (22).

4. The wind turbine blade (14) according to claim 3,
wherein the leading-edge-side outer shell (23) is separable into a plurality of sections in the longitudinal direction.

5. The wind turbine blade (14) according to any one of claims 1 to 4, wherein the abrasive-resistant film (24) is made of a metal material, and wherein the wind turbine blade (14) further comprises:
a lightning protection unit (51) for leading lightning current caused by lightning from the abrasive-resistant film (24) toward the ground via the rotor hub (13).

6. The wind turbine blade (14) according to any one of claims 1 to 5,
wherein the abrasive-resistant film (24) is made of a metal material, and
wherein the wind turbine blade (14) further comprises:
an anti-adfreezing unit (61) for electrifying and heating the abrasive-resistant film (24).

7. The wind turbine blade (14) according to any one of claims 1 to 6,
wherein the abrasive-resistant film (24) is provided to cover an entire surface of the leading-edge-side outer shell (23).

8. The wind turbine blade (14) according to any one of claims 1 to 6,
wherein the abrasive-resistant film (24) is provided to partially cover a surface of the leading-edge-side outer shell (23).

9. A wind turbine generator (1A) **characterized in that** it comprises:
a rotor hub (13) configured rotatable around a rotation axis;
a tower (11) for rotatably supporting the rotor hub (13);
a wind turbine (3) comprising the wind turbine blade (14) of any one of claims 1 to 6, the wind turbine blade (14) mounted to the rotor hub (13) radially around the rotation axis; and
a generator (15) configured to be driven directly or indirectly by rotation of a rotation shaft (16).
